(19) **Europäisches Patentamt European Patent Office Office européen des brevets**

(11) **EP 3 825 476 B1**

(12) **EUROPEAN PATENT SPECIFICATION**

(45) Date of publication and mention of the grant of the patent:
**26.07.2023 Bulletin 2023/30**

(21) Application number: **20209117.9**

(22) Date of filing: **23.11.2020**

(51) International Patent Classification (IPC):
**E02F 9/22** *(2006.01)*        **B66F 11/04** *(2006.01)*
**F15B 21/08** *(2006.01)*        **G05B 13/02** *(2006.01)*
**E02F 9/20** *(2006.01)*        **B66F 9/22** *(2006.01)*
**F16H 59/44** *(2006.01)*        **F16H 59/70** *(2006.01)*
**F16H 61/00** *(2006.01)*        **F16H 59/38** *(2006.01)*

(52) Cooperative Patent Classification (CPC):
**E02F 9/2253; B66F 9/22; E02F 9/2004;**
F16H 59/44; F16H 59/70; F16H 61/0021;
F16H 2059/385

(54) **METHOD FOR CONTROLLING THE HYDRAULIC AGGRESSIVENESS OF A WORK VEHICLE AND WORK VEHICLE**

VERFAHREN ZUR STEUERUNG DER HYDRAULISCHEN AGGRESSIVITÄT EINES ARBEITSFAHRZEUGS UND ARBEITSFAHRZEUG

PROCÉDÉ DE CONTRÔLE DE L'AGRESSIVITÉ HYDRAULIQUE D'UN VÉHICULE DE TRAVAIL ET VÉHICULE DE TRAVAIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.11.2019 IT 201900021831**

(43) Date of publication of application:
**26.05.2021 Bulletin 2021/21**

(73) Proprietor: **CNH Industrial Italia S.p.A.**
**10156 Torino (IT)**

(72) Inventors:
• **Aresta, Alessio**
**72023 Brindisi Mesagne (IT)**
• **Carvignese, Cosimo**
**72023 Mesagne (BR) (IT)**
• **Venezia, Antonio**
**10153 Torino (IT)**

(74) Representative: **CNH Industrial IP Department**
**Leon Claeysstraat 3A**
**8210 Zedelgem (BE)**

(56) References cited:
EP-A1- 1 830 053        EP-A1- 3 153 713
EP-A1- 3 392 110        EP-A1- 3 431 830
WO-A1-2011/109017        WO-A1-2019/101313
JP-A- 2019 143 739        US-A1- 2018 106 016

**Description**

TECHNICAL FIELD

The present invention concerns a method for controlling a hydraulic circuit of a work vehicle, in particular a method for controlling the aggressiveness of such hydraulic circuit.

BACKGROUND OF THE INVENTION

Work vehicles such as telehandlers comprise a hydraulic power circuit configured to provide oil at high pressure to allow the movement of hydraulic actuated elements such as actuators or arms.
In particular, such hydraulic actuated elements are controlled via a joystick configured to be handled by the user and moved with respect to a rest position. The movement is transformed into a command signal, e.g. an electric signal, that is sent to valves that are voted to the control of oil flow in the aforementioned hydraulic power circuit.
In particular, there are four parameters that can be regulated in order to vary the responsiveness/aggressiveness of the hydraulic power circuit in response to a movement of the joystick. Such parameters are:

- A dead band, i.e. a physical minimum length of movement of the joystick with respect to its rest position in order to appreciate the generation of a command signal, i.e. a minimum current for activating the valves of the hydraulic power circuit;
- A maximum control signal value, e.g. a maximum current signal value, i.e. a maximum fluid flow which can pass through the valves of the hydraulic power circuit;

- Shape, i.e. the control signal versus joystick position curve (e.g., mathematical equation which converts the joystick deflection from rest position to a control signal between minimum and maximum values aforementioned); and

- A dynamic parameter, i.e. the time constant of a low-pass filter, configured to avoid the transmission of movement of the joystick due to vibrations, e.g. imparted during the movement on a steep terrain.

Normally, the speed of the vehicle is a crucial parameter which deeply influences the operating conditions of the vehicle and the way the user handles the joystick. Indeed, if the speed of the vehicle increases, the engine speed increases as well and subsequently also the responsiveness/aggressiveness of the hydraulic power circuit. In fact, the hydraulic power depends on the engine speed, indeed the more speed is provided to its output shaft by the engine, the more the pump may generates hydraulic power.
In this condition, normally, the operator touches the joystick only for small movements and corrections, in fact the heavy hydraulic tasks are performed at low vehicle speed. While driving, the maximum power availability works against the small corrections desired by the user (i.e., the same joystick position causes a greater hydraulic motion when engine speed is high rather than it is low).
Accordingly, he slightly moves the joystick to achieve small corrections, but his operation is worsened by steep ground. Since the engine speed cannot be reduced because of desired vehicle speed, it is necessary to adapt control signal to piloting valves to decrease its responsiveness (e.g., the shape and the maximum control signal value).
Conversely, at low speed/gears, the hydraulic power is lower and it is useful for the user to increase responsiveness/aggressiveness of the hydraulic power circuit, i.e. there is a higher shape, maximum control signal value and an anticipation of the dead band.
Accordingly, the responsiveness/aggressiveness of the vehicle, i.e. the capability of the hydraulic power circuit to accomplish with efficiency its tasks, is function of the velocity of the vehicle, i.e. with its motion.
It is known to provide different "typologies" of work conditions of the vehicle that the user may select before starting such specific work operation. A control unit can vary accordingly the aforementioned parameters of the joystick so that the hydraulic power circuit can respond in a quick and efficient way. However, it is clear that all the possible operation of the vehicle cannot be neither included nor foreseen according to the specific use condition of the vehicle. EP3392110 *shows a wheel loader with a controller that in use can transmit hydraulic pressure command signals to an operating valve in response to the operation of a work implement lever by an operator. The operating valve functions to evaluate the work implement hydraulic pressure command signals and to control the supply amount of hydraulic fluid supplied from a hydraulic pump to a hydraulic actuator. The action speed of the work implement is maintained by adjusting the operating amount of the work implement lever.*
Therefore, the need is felt to provide a control method for managing a power hydraulic circuit in order to adjust its responsiveness/aggressiveness, i.e. its velocity of reaction to inputs given by the user and its efficiency.
An aim of the present invention is to satisfy the above mentioned needs.

SUMMARY OF THE INVENTION

The aforementioned aim is reached by a control method as claimed in the appended set of claims.

BRIEF DESCRIPTION OF DRAWINGS

For a better understanding of the present invention, a preferred embodiment is described in the following, by way of a non-limiting example, with reference to the attached drawings wherein:

- Figure 1 is a diagram illustrating the relationship among different elements controlling the control of a hydraulic power circuit; and
- Figure 2 is a diagram illustrating a control method for varying the operational characteristic of a hydraulic power circuit of a work vehicle according to the invention.

DETAILED DESCRIPTION OF THE INVENTION

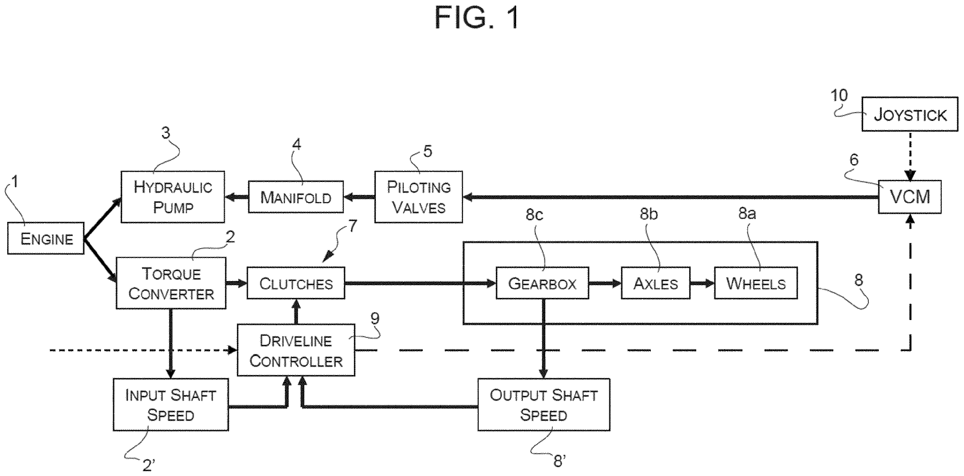

Figure 1 shows schematically the operational relationships between different elements of a work vehicle (not shown) such as a telehandler.

In particular, an engine 1 of the vehicle, e.g. an internal combustion engine, is configured to provide a torque between a torque converter 2 and a hydraulic pump 3 configured to pump fluid into a hydraulic power circuit (not shown) of the vehicle and configured to actuate an hydraulic actuated elements such as a boom.

The hydraulic pump 3 is controlled by piloting valves 5 and manifolds 4 that are in turn controlled by a an electronic unit 6.

The torque converter 2 is configured to provide torque via a clutch system 7 to a transmission module 8; this latter will provide the torque to wheels 8a via axles 8b through a system of gears 8c, as known in the art and not discussed into detail.

As known, it is noticed that the velocity in input via an input shaft 2' upstream with respect clutches 7 is different with respect to the velocity of an output shaft 8' downstream with respect clutches 7.

The work vehicle further comprises a driveline controller 9 configured to control clutches 7 so as to change the transmission ratio of the transmission module 8, i.e. to vary the ratio between the input shaft 2' and the output shaft 8'. Such driveline controller 9 is actuated by the operator and, as known, may be controlled either manually or electronically.

Notwithstanding the way in which the driveline controller 9 is activated by the user, this latter is electrically connected to the electronic unit 6 that can acquire data related to the operation of the clutches 7 and transmission module 8.

According to the invention, the electronic unit 6 implements a control method, described thereinafter, to continuously control the work status of the vehicle and control accordingly the hydraulic pump 3, as described, via piloting valves 5 and manifold 4.

Preferably, the electronic unit 6 may be a vehicle control module, e.g. the ECU of the vehicle and, obviously comprises elaboration means configured to memorize and elaborate values received as input as electronic signals and provide an electronic signal as output.

The work vehicle further comprises a joystick 10, of known typology and configured to be electrically connected to electronic unit 6 in order to transmit an output signal according to the run imparted by the user.

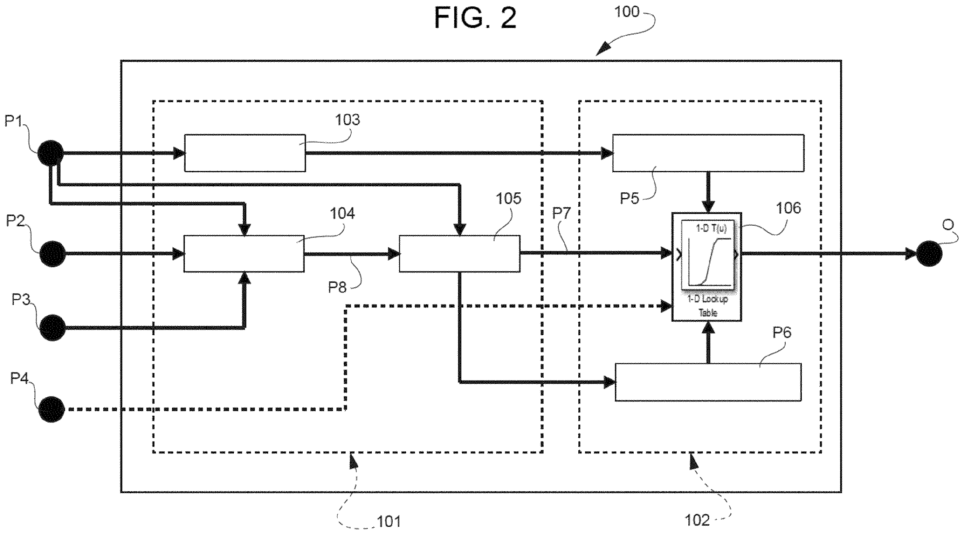

As schematically shown in figure 2, the electronic unit 6 receives as inputs four parameters $P_1$, $P_2$, $P_3$ and $P_4$, elaborates these latter through an elaboration step 100 as described hereunder and provides an output signal O configured to control the valves 3 as disclosed above.

In greater particular:

- The first input parameter $P_1$ is the output shaft speed, in rpm, i.e. the speed of the output shaft 8' of the transmission module 8;
- The second input parameter $P_2$ is the input shaft speed, in rpm, i.e. the speed of the input shaft 2' coupled to the torque converter 2;
- The third input parameter $P_3$ is an information indicative of the gear selected by the transmission module 8; and
- The fourth input parameter $P_4$ is an information indicative of a joystick position.

The elaboration step 100 of the aforementioned four parameters comprises a first stage of elaboration 101 of at least some of the aforementioned input parameters for providing intermediate parameters $P_5$, $P_6$, $P_7$ and a second stage of elaboration 102 into which the intermediate parameters $P_5$, $P_6$, $P_7$ are elaborated together with at least one of the aforementioned input parameters for providing the above mentioned output signal O.

In greater particular:

- The first intermediate parameter $P_5$ is a maximum current value, in mA, representing the maximum current available for piloting the valves 5;
- The second intermediate parameter $P_6$ is a minimum current value, in mA, representing the minimum current available for piloting the valves 5; and
- The third intermediate parameter $P_7$ is a current curve shape selection which may assume three different values, e.g. 0 i.e. parabolic, 1 i.e. linear or 2 i.e. logarithmic.

In the following, the first stage of elaboration 101 into which some of the aforementioned input parameters are elaborated for providing intermediate parameters $P_5$, $P_6$, $P_7$ will be described.

The first stage of elaboration 101 comprises a first computational block 103 configured to elaborate the first input parameter $P_1$, i.e. the output shaft speed to obtain the first intermediate parameter $P_5$. In particular, the maximum available current for piloting valves 5 is computed according to actual vehicle ground speed. In mathematical terms, the equation may be represented as:

$$I_{max} = f\left(V_{ground}\right)$$

The vehicle ground speed is estimated via the value of output shaft speed and the wheel rolling circumference, memorized in the electronic unit 4 in advance and settable by the user, e.g. via a display. The relationship between the maximum available current and the vehicle ground speed may be an interpolating function (e.g. linear, parabolic, etc.). Generally, low speed corresponds to maximum value of the current, whilst low speed to minimum value of the current.

The shape of the interpolating function can be selected by the operator via a display and a plurality of different configuration may be foreseen. Preferably, the configuration may be in a limited number, e.g. three presets (soft corresponds to 0%, medium to 50% and hard to 100%) or via a continuous value (percentage on advanced models). Using the example of the three preset values, the shape changes from parabolic (0%) to linear (50%) to logarithmic (100%). When the percentage is used, the shape assumes a wide range of intermediate curves.

The first stage of elaboration 101 comprises a second computational block 104 and a third computational block 105; the second computational block 104 is configured to elaborate the first, second and third input parameters $P_1$, $P_2$, $P_3$ to estimate a secondary input parameter $P_8$ used for the computation of a third computational block 105 comprised by the first stage of elaboration 101.

In particular, the second computational block 104 estimates the sliding factor of torque converter 2 in percentage. Such estimation is run in parallel to the computation of first computational block 103. The estimation is based on the input and output shaft speeds (i.e. the first and second input parameters $P_1$, $P_2$) to compute a target input shaft speed by knowing the actual engaged gear (i.e. third input parameter) therefore via transmission ratio. The math equation is the following:

$$sf = 100\left(1 - \frac{Measured\ input\ Speed}{Target\ Input\ Speed}\right) = 100\left(1 - \frac{P_2}{P_1 * P_3}\right)$$

Indeed, the target input speed may be calculated by using the measured input speed while knowing the engaged gear. Besides the above computation, some vehicle conditions are preferably evaluated to avoid numerical errors, namely:

- Neutral vehicle condition, into which sf is imposed equal to 1;
- If the user is changing the gear the sf value is frozen and maintained as the last valid computed value. The computation starts again when the change of gear is completed; or
- Manual declutch by the operator, into which sf is imposed equal to 1.

Obviously, the above list is merely exemplificative and other conditions may be estimated and memorized in the second computational block 104.

The above mentioned third computational block 105, run subsequently to first and second computational blocks 103, 104, is configured to elaborate the input parameter $P_1$ and the secondary input parameter $P_8$ to obtain the second intermediate parameter $P_6$, i.e. the value of the minimum current value for piloting valves 5 and $P_7$, i.e. a selection signal which can assume a discrete value, as described below.

If the sf quantity is greater than a threshold, e.g. 70% (i.e. high load for the engine and very low ground speed), the vehicle is considered under heavy load. This means, it is not carrying out a precision maneuver but a power motion (e.g. digging, loading, etc). In this condition, the curve moves to a logarithmic function (fixed within the controller, by the third value of $P_7$ as described below) and the minimum current jumps to its maximum allowable value. The three different selected curve may be logically imposed as 0= parabolic curve, 1= linear curve and 2= logarithmic curve (i.e., the logical values the $P_7$ can assume). Clearly, such values and functions are memorized in a table in the electronic control unit 6, with respect to a corresponding value of sliding factor sf.

In mathematical terms, the equation may be represented as:

$$I_{min} = f\ (V_{ground};sf)$$

In detail, if the vehicle speed is greater than a threshold (e.g. 10kph), the value of vehicle speed is used to change the shape of the current versus joystick deflection curve using the $P_7$ signal (e.g. moving from linear to parabolic). A parabolic curve implies that in the first part of joystick deflection, the current gradient respect to joystick position is smaller (i.e., less responsiveness). The computational block 105 changes the minimum current value to its minimum allowable value. On the contrary, if the vehicle speed is smaller than a threshold (e.g. 10kph), the $P_7$ depends on torque converter sliding factor sf.

In the following, the second stage of elaboration 102 into which the intermediate parameters $P_5$, $P_6$, $P_7$ and at least one of the input parameters are elaborated to provide the output O, will be described.

In particular, the second stage of elaboration 102 comprises a single computation block 106 into receiving as input the first, second and third intermediate parameters $P_5$, $P_6$ and $P_7$ and the fourth input parameter, i.e. position of the joystick.

The single computation block 106 comprises a mathematical computation of the aforementioned parameters so as to retrieve the value of current to provide as output.

In particular the mathematical computation comprises different equations according to the status of the third intermediate parameter $P_7$.

In particular:

- when it is equal to zero $O = a * P_4{}^2 + b * P_4 + c$
- when it is equal to one $O = d * P_4 + e$
- when it is equal to two $O = f * \ln(g * P_4) + h$

The values of coefficients b and f are memorized in the electronic control unit 6 and can be calibrated vehicle per vehicle during its validation. In particular, both values represents the slope of the curve defined by the equation and therefore represents the responsiveness/aggressiveness of the system. Indeed, the greater it is, the greater is the responsiveness/aggressiveness of the system and viceversa.

The other coefficients, indeed a, c, d, e, g, h are calculated on-time by forcing the related equation to pass from a couple of points of pre-set values. Such couple of points represents the equation resulting, e.g. in O= 0,1 and O=0,9, which is assumed when $P_4$ is equal to, respectively, $P_6$ and $P_5$. In mathematical terms, being a point a couple of the type (O, $P_4$) the first point is then assumed (0,1; $P_6$) and the second point (0,9; $P_5$), wherein the values of $P_6$ and $P_5$ have been already computed in the preceding blocks.

Summarizing:

- reading $P_7$ value the block 106 determines which mathematical equation it shall use, then:

    o if $P_7$ is equal to 1, the output O is computed using $P_4$ in $O = d * P_4 + e$ equation and parameters d and e are computed using actual $P_5$ and $P_6$ values assuming a value of O, i.e. using a couple of fixed Cartesian coordinates, for example (0,1; $P_5$) and (0,9; $P_6$) ; and
    o if $P_7$ is equal to 0, the output O is computed using $O = a * P_4{}^2 + b * P_4 + c$ equation, into which parameter b is known and parameters a and c are computed using actual $P_5$ and $P_6$ values assuming a value of O, i.e. using a couple of fixed Cartesian coordinates, for example (0,1; $P_5$) and (0,9; $P_6$);
    o if $P_7$ is equal to 2, the output O is computed using $O = f * \ln(g * P_4) + h$ equation, into which parameters g and h are computed using actual $P_5$ and $P_6$ values assuming a value of O, i.e. using a couple of fixed Cartesian coordinates, for example (0,1; $P_5$) and (0,9; $P_6$).

The flux of operation of all the elaboration 100 may be synthetized below:

- First computational block 103 uses the first input parameter $P_1$ to provide the first intermediate parameter $P_5$;
- In parallel to the above, block 104 uses first, second and third input parameters, $P_1$, $P_2$, $P_3$ to estimate a secondary input parameter $P_8$;
- Then, third computational block 105 uses secondary input parameter $P_8$ and first input parameter $P_1$ to provide a

second and a third intermediate parameters, $P_6$, $P_7$.

- Accordingly, single computational block 106 uses all the intermediate parameters $P_5$, $P_6$, $P_7$ and the fourth input parameter $P_4$ to calculate the output current to be provided to the valves 5.

It is clear the invention is also related to a work vehicle as defined above and comprising the electronic unit 6 elaborating the above method. Such control method may be elaborated automatically by the work vehicle or can be selected (or unselected) by the user by pushing a specific button or selecting a specific command.

In view of the foregoing, the advantages of a method for controlling the aggressiveness of a hydraulic circuit of a work vehicle according to the invention are apparent.

Thanks to the proposed control method, the work vehicle will adapt itself the hydraulic characteristics without asking to the driver to perform a dedicated action, i.e. to select some predefined configurations.

Accordingly, the performances of the hydraulic power circuit of a vehicle are optimized for the current working operation, thereby improving the comfort of the operator and the efficiency in the operation he is performing.

Furthermore, the data retrieved to the use of the vehicle and the related hydraulic power circuit may be memorized and used for supervisory and maintenance aims.

It is clear that modifications can be made to the described method for controlling the aggressiveness of a hydraulic circuit of a work vehicle which do not extend beyond the scope of protection defined by the claims.

For example, it is clear that some mathematical elaboration or some parameters or coefficients can be varied according to the limits defined in the appended claims.

## Claims

1. Method (100) for controlling valve means (5) of a hydraulic power circuit of a work vehicle, the work vehicle comprising:

an engine (1) carrying a hydraulic pump for providing fluid in pressure to said hydraulic power circuit and a torque converter (2) coupled, via clutch means (7) to a transmission (8) of said work vehicle,
a driveline controller (9) configured to control said clutch means (7) and/or said transmission (8),
a joystick (10) configured to be handled by a user of said work vehicle and to generate a electric signal configured to control said valve means (5) as a function of the displacement with respect to a rest position of said joystick (10),
an electronic unit (6) electrically connected to said driveline controller (9) and to said joystick (10), said electronic unit (6) comprising elaboration means configured to acquire data from said work vehicle, elaborate this latter according to said method (100) and generate a control signal for controlling said valve means (5),
said acquired data including:

• A first input parameter (P1) representing a speed of said work vehicle,
• A second input parameter (P2) representing a speed of an input shaft coupled to said torque converter (2),
• A third input parameter (P3) related to the gear ratio selected into said transmission (8), and
• A fourth input parameter (P4) representing a position of said joystick (10),

said method (100) comprising the following stages and steps:

• a first stage of elaboration (101) comprising the following steps of:

o a first elaboration step (103) wherein said first input parameter (P1) is acquired and elaborated to provide a first intermediate parameter (P5), wherein said first intermediate parameter (P5) is representative of a maximum current for activating said valve means (5) and wherein said elaboration is a mathematical function providing a value of said first intermediate parameter (P5) for a specific value of said first input parameter (P1);
o a second elaboration step (104), run in parallel to said first elaboration step (103), wherein said first, second and third input parameters (P1, P2, P3) are acquired and elaborated to provide a secondary input parameter (P8) wherein said secondary input parameter (P8) is representative of a sliding factor (sf) of said torque converter (2) and wherein said elaboration is a mathematical function providing a value of secondary input parameter (P8) for specific values of said first, second and third input parameters (P1, P2, P3);
o a third elaboration step (105), subsequent to said first and second elaboration steps (103, 104), wherein said first input parameter (P1) and said secondary input parameter (P8) are acquired and elaborated to provide a second and a third intermediate parameter (P6, P7), wherein said third intermediate parameter (P7) is a discrete value assumed in function of said secondary input parameter (P8) and wherein said second intermediate parameter (P6) is representative of a minimum current for activating said valve means (5), the elaboration for providing said second intermediate parameter (P6) is a mathematical a function providing a value of this latter for specific values of said first input parameter (P1) and said secondary input parameter (P8),

• a second stage of elaboration (102) comprising a single step (106) of combining said fourth input parameter (P4) together with said first, second and third intermediate parameter (P6, P7, P8) to provide an output signal (O) configured to control said valve means (5), said combination of said fourth input parameter (P4) comprising mathematical elaboration based on coefficients calculated in function of said first, second and third intermediate parameter (P5, P6, P7).

2. Method according to claim 1, wherein said speed of said work vehicle is calculated by multiplying said first input parameter (P1) by a memorized value representative of the diameter of the wheels of said work vehicle.

3. Method according to claim 1 or 2, wherein said function for providing said first intermediate parameter (P5) comprises a polynomial relationship between said first input parameter (P1) and memorized coefficients into said electronic control unit (6).

4. Method according to any of the preceding claims, wherein said elaboration of said function for providing secondary the input parameter (P8) provides a percentage value, said percentage being the complementary value of the ratio between said second input parameter (P2) with respect to the multiplication of said first and third input parameters (P1, P3).

5. Method according to any of the preceding claims, wherein said elaboration for providing said third intermediate parameter (P7) is defined by a selection of corresponding values from a memorized tabulated values into said electronic control unit (6) as a function of said secondary input parameter (P8), said values being at least three.

6. Method according to any of the preceding claims, wherein said function for providing said second intermediate parameter (P5) comprises a polynomial relationship between said first input parameter (P1), said secondary input parameter (P8) and memorized coefficients into said electronic control unit (6).

7. Method according to any of the preceding claims, wherein said output signal (O) is defined by a function of said fourth input parameter (P4) and coefficients, some among said coefficients being memorized into said electronic control unit (6) and the remaining among said coefficients being calculated in function of said first and second intermediate parameters (P5, P6), said function being a memorized function selected on the base of the discrete value of said third intermediate parameter (P7).

8. Method according to claim 7, wherein said function defining said output signal is a polynomial function when said third intermediate parameter (P7) is equal to zero, a linear function when said third intermediate parameter (P7) is equal to one and a logarithmic function when said third intermediate parameter (P7) is equal to two.

9. Method according to claim 7 or 8, wherein said calculated coefficients are calculated by imposing the value of said fourth input parameter (P4) to a first point corresponding to the value of said first intermediate parameters (P5) wherein the output signal (O) is defined according to a first pre-set value and a second point corresponding to the value of said second intermediate parameter (P6) wherein the output signal (O) is defined according to a second pre-set value.

10. Work vehicle comprising:

an engine (1) carrying a hydraulic pump for providing pressurised fluid to a power circuit and a torque converter (2) coupled, via clutch means (7) to a transmission (8) of said work vehicle,
a driveline controller (9) configured to control said clutch means (7) and/or said transmission (8),
a joystick (10) configured to be handled by a user of said work vehicle and to generate a electric signal configured to control said valve means (5) in function of the displacement with respect to a rest position of said joystick (10),
an electronic unit (6) electrically connected to said driveline controller (9) and to said joystick (10), said electronic unit (6) comprising elaboration means configured to acquire data from said work vehicle, elaborate this latter according to a method (100) according to any of the preceding claims to generate a control signal for controlling said valve means (5),

said acquired data including:

- A first input parameter (P1) representing a speed of said work vehicle,
- A second input parameter (P2) representing a speed of the input shaft coupled to said torque converter (2),
- A third input parameter (P3) related to the gear ratio selected into said transmission (8), and
- A fourth input parameter (P4) representing a position of said joystick (10).

## Patentansprüche

1. Verfahren (100) zur Steuerung von Ventileinrichtungen (5) einer hydraulischen Schaltung eines Arbeitsfahrzeugs, wobei das Arbeitsfahrzeug aufweist:

   einen Motor (1), der eine Hydraulikpumpe, um der hydraulischen Schaltung ein mit Druck beaufschlagtes Fluid zuzuführen, und einen Drehmomentwandler (2) trägt, der über eine Kupplungseinrichtung (7) mit einer Übertragungseinrichtung (8) des Arbeitsfahrzeugs gekoppelt ist,
   eine Kraftübertragungssteuerung (9), die dazu eingerichtet ist, die Kupplungseinrichtung (7) und/oder die Übertragungseinrichtung (8) zu steuern,
   einen Steuerhebel (10), der dazu eingerichtet ist, von einem Benutzer des Arbeitsfahrzeugs betätigt zu werden und ein elektrisches Signal zu erzeugen, das dazu eingerichtet ist, die Ventileinrichtungen (5) in Abhängigkeit von der Verschiebung bezüglich einer Ruhestellung des Steuerhebels (10) zu steuern,
   eine elektronische Einheit (6), die mit der Kraftübertragungssteuerung (9) und dem Steuerhebel (10) elektrische gekoppelt ist, wobei die elektronische Einheit (6) Verarbeitungseinrichtungen aufweist, die dazu eingerichtet sind, Daten von dem Arbeitsfahrzeug zu erhalten, die letzteren gemäß dem Verfahren (100) zu verarbeiten, und ein Steuersignal zur Steuerung der Ventileinrichtungen (5) zu erzeugen,
   wobei die erhaltenen Daten umfassen:

      einen ersten Eingangsparameter (P1), der charakteristisch für eine Geschwindigkeit des Arbeitsfahrzeugs ist,
      einen zweiten Eingangsparameter (P2), der charakteristisch für eine Geschwindigkeit einer Eingangswelle ist, die mit dem Drehmomentwandler (2) gekoppelt ist,
      einen dritten Eingangsparameter (P3) betreffend das Übersetzungsverhältnis, das für die Übertragungseinrichtung (8) ausgewählt ist,
      einen vierten Eingangsparameter (P4), der charakteristisch für eine Stellung des Steuerhebels (10) ist,
      wobei das Verfahren (100) die folgenden Stufen und Schritte umfasst:
      eine erste Verarbeitungsstufe (101) mit den folgenden Schritten:

         einen ersten Verarbeitungsschritt (103), wobei der erste Eingangsparameter (P1) erhalten und verarbeitet wird, um einen ersten Zwischenparameter (P5) bereitzustellen, wobei der erste Zwischenparameter (P5) charakteristisch ist für einen maximalen Strom zur Aktivierung der Ventileinrichtungen (5), und wobei die Verarbeitung eine mathematische Funktion ist, die einen Wert des ersten Zwischenparameters (P5) für einen spezifischen Wert des ersten Eingabeparameters (P1) liefert;
         einen zweiten Verarbeitungsschritt (104), der parallel zu dem ersten Verarbeitungsschritt (103) erfolgt, wobei der erste, der zweite und der dritte Parameter (P1, P2, P3) erhalten und verarbeitet werden, um einen sekundären Eingangsparameter (P8) bereitzustellen, wobei der sekundäre Eingangsparameter (P8) charakteristisch ist für einen Gleitfaktor (sf) des Drehmomentwandlers (2) und wobei die Verarbeitung eine mathematische Funktion betrifft, die einen Wert des sekundären Eingangsparameters (P8) für spezifische Wert des ersten, des zweiten und des dritten Eingangsparameters (P1, P2, P3) liefert;
         einen dritten Verarbeitungsschritt (105), nach dem ersten und dem zweiten Verarbeitungsschritt (103, 104), wobei der erste Eingangsparameter (P1) und der sekundäre Eingangsparameter (P8) erhalten und verarbeitet werden, um einen zweiten und einen dritten Zwischenparameter (P6, P7) bereitzustellen, wobei der dritte Zwischenparameter (P7) ein diskreter Wert ist, der in Abhängigkeit des sekundären Eingangsparameters (P8) angenommen wird, und wobei der zweiten Zwischenparameter (P6) charakteristisch ist für einen minimalen Strom zum Aktivieren der Ventileinrichtungen (5), wobei die Verarbeitung zur Bereitstellung des zweiten Zwischenparameters (P6) eine mathematische Funktion ist, die einen Wert des letzteren für spezifische Werte des ersten Eingangsparameters (P1) und des sekundären Eingangsparameters (P8) liefert,

eine zweite Verarbeitungsstufe (102) mit einem einzigen Schritt (106) des Kombinierens des vierten Eingangsparameters (P4) zusammen mit dem ersten, dem zweiten und dem dritten Zwischenparameter (P6, P7, P8), um ein Ausgangssignal (O) bereitzustellen, das konfiguriert ist, um die Ventileinrichtungen (5) zu steuern, wobei die Kombination des vierten Eingangsparameters (P4) eine mathematische Verarbeitung auf der Basis von Koeffizienten umfasst, die in Abhängigkeit des ersten, des zweiten, und des dritten Zwischenparameters (P5, P6, P7) berechnet werden.

2. Verfahren nach Anspruch 1, wobei die Geschwindigkeit des Arbeitsfahrzeugs berechnet wird, indem der erste Eingangsparameter (P1) mit einem gespeicherten Wert, der charakteristisch für den Durchmesser der Räder des Arbeitsfahrzeugs ist, multipliziert wird.

3. Verfahren nach Anspruch 1 oder 2, wobei die Funktion zur Bereitstellung des ersten Zwischenparameters (P5) eine polynominale Beziehung zwischen dem ersten Eingangsparameter (P1) und gespeicherten Koeffizienten in der elektronischen Steuereinheit (6) umfasst.

4. Verfahren nach einem der vorhergehenden Ansprüche, wobei die Verarbeitung der Funktion zur Bereitstellung des sekundären Eingangsparameters (P8) einen Prozentwert bereitstellt, wobei der Prozentwert der komplementäre Wert des Verhältnisses zwischen dem zweiten Eingangsparameter (P2) bezüglich der Multiplikation des ersten und des dritten Eingangsparameters (P1, P3) ist.

5. Verfahren nach einem der vorhergehenden Ansprüche, wobei die Verarbeitung zur Bereitstellung des dritten Zwischenparameters (P7) definiert wird durch eine Auswahl von entsprechenden Werten aus den in Tabellenform gespeicherten Werten in der elektronischen Steuereinheit (6) in Abhängigkeit des sekundären Eingangsparameters (P8), wobei die Werte mindestens drei sind.

6. Verfahren nach einem der vorhergehenden Ansprüche, wobei die Funktion zur Bereitstellung des zweiten Zwischenparameters (P5) eine polynominale Beziehung zwischen dem ersten Eingangsparameter (P1), dem sekundären Eingangsparameter (P8) und gespeicherten Koeffizienten in der elektronischen Steuereinheit (6) umfasst.

7. Verfahren nach einem der vorhergehenden Ansprüche, wobei das Ausgangssignal (O) definiert wird durch eine Funktion des vierten Eingangsparameters (P4) und Koeffizienten, wobei einige der Koeffizienten in der elektronischen Steuereinheit (6) gespeichert sind und die verbleibenden der Koeffizienten in Abhängigkeit des ersten und des zweiten Zwischenparameters (P5, P6) berechnet werden, wobei die Funktion eine gespeicherte Funktion ist, die auf der Basis des diskreten Wertes des dritten Zwischenparameters (P7) ausgewählt wird.

8. Verfahren nach Anspruch 7, wobei die Funktion, die das Ausgangssignal definiert, eine polynominale Funktion ist, wenn der dritte Zwischenparameter (P7) gleich null ist, eine lineare Funktion ist, wenn der dritte Zwischenparameter (P7) gleich eins ist, und eine logarithmische Funktion ist, wenn der dritte Zwischenparameter (P7) gleich zwei ist.

9. Verfahren nach Anspruch 7 oder 8, wobei die berechneten Koeffizienten berechnet werden, indem der Wert des vierten Eingangsparameters (P4) einem ersten Punkt entsprechend dem Wert des ersten Zwischenparameters (P5) auferlegt wird, wobei das Ausgangssignal (O) gemäß einem ersten vorbestimmten Wert und einem zweiten Punkt entsprechend dem Wert des zweiten Zwischenparameters (P6) definiert wird, wobei das Ausgangssignal (O) gemäß einem zweiten vorbestimmten Wert definiert wird.

10. Arbeitsfahrzeug mit

einem Motor (1), der eine Hydraulikpumpe, um der hydraulischen Schaltung ein mit Druck beaufschlagtes Fluid zuzuführen, und einen Drehmomentwandler (2) trägt, der über eine Kupplungseinrichtung (7) mit einer Übertragungseinrichtung (8) des Arbeitsfahrzeugs gekoppelt ist,
einer Kraftübertragungssteuerung (9), die dazu eingerichtet ist, die Kupplungseinrichtung (7) und/oder die Übertragungseinrichtung (8) zu steuern,
einem Steuerhebel (10), der dazu eingerichtet ist, von einem Benutzer des Arbeitsfahrzeugs betätigt zu werden und ein elektrisches Signal zu erzeugen, das dazu eingerichtet ist, die Ventileinrichtungen (5) in Abhängigkeit von der Verschiebung bezüglich einer Ruhestellung des Steuerhebels (10) zu steuern,
einer elektronischen Einheit (6), die mit der Kraftübertragungssteuerung (9) und dem Steuerhebel (10) elektrische gekoppelt ist, wobei die elektronische Einheit (6) Verarbeitungseinrichtungen aufweist, die dazu eingerichtet sind, Daten von dem Arbeitsfahrzeug zu erhalten, die letzteren gemäß dem Verfahren (100) zu verarbeiten, und ein Steuersignal zur Steuerung der Ventileinrichtungen (5) zu erzeugen, wobei die erhaltenen Daten umfassen:

einen ersten Eingangsparameter (P1), der charakteristisch für eine Geschwindigkeit des Arbeitsfahrzeugs ist,

einen zweiten Eingangsparameter (P2), der charakteristisch für eine Geschwindigkeit einer Eingangswelle ist, die mit dem Drehmomentwandler (2) gekoppelt ist,

einen dritten Eingangsparameter (P3) betreffend das Übersetzungsverhältnis, das für die Übertragungseinrichtung (8) ausgewählt ist, und

einen vierten Eingangsparameter (P4), der charakteristisch für eine Stellung des Steuerhebels (10) ist.

## Revendications

**1.** Procédé (100) pour commander des moyens de vanne (5) d'un circuit de puissance hydraulique d'un véhicule de travail, le véhicule de travail comprenant :

un moteur (1) portant une pompe hydraulique pour délivrer un fluide sous pression audit circuit de puissance hydraulique et un convertisseur de couple (2) couplé, via des moyens d'embrayage (7), à une transmission (8) dudit véhicule de travail,

un contrôleur de chaîne cinématique (9) configuré pour commander lesdits moyens d'embrayage (7) et/ou ladite transmission (8),

une manette (10) configurée pour être manipulée par un utilisateur dudit véhicule de travail et pour générer un signal électrique configuré pour commander lesdits moyens de vanne (5) en fonction du déplacement par rapport à une position de repos de ladite manette (10),

une unité électronique (6) connectée électriquement audit contrôleur de chaîne cinématique (9) et à ladite manette (10), ladite unité électronique (6) comprenant des moyens d'élaboration configurés pour acquérir des données provenant dudit véhicule de travail, élaborer ce dernier selon ledit procédé (100) et générer un signal de commande pour commander lesdits moyens de vanne (5),

lesdites données acquises comprenant :

• Un premier paramètre d'entrée (P1) représentant une vitesse dudit véhicule de travail,
• Un deuxième paramètre d'entrée (P2) représentant une vitesse d'un arbre d'entrée couplé audit convertisseur de couple (2),
• Un troisième paramètre d'entrée (P3) lié au rapport de vitesse sélectionné dans ladite transmission (8), et
• Un quatrième paramètre d'entrée (P4) représentant une position de ladite manette (10),

ledit procédé (100) comprenant les étapes et les phases suivantes :

• une première étape d'élaboration (101) comprenant les étapes suivantes :

o une première étape d'élaboration (103) dans laquelle ledit premier paramètre d'entrée (P1) est acquis et élaboré pour fournir un premier paramètre intermédiaire (P5),
dans lequel ledit premier paramètre intermédiaire (P5) est représentatif d'un courant maximum pour activer lesdits moyens de vanne (5) et dans lequel ladite élaboration est une fonction mathématique fournissant une valeur dudit premier paramètre intermédiaire (P5) pour une valeur spécifique dudit premier paramètre d'entrée (P1) ;
o une deuxième étape d'élaboration (104), exécutée en parallèle à ladite première étape d'élaboration (103), dans laquelle lesdits premier, deuxième et troisième paramètres d'entrée (P1, P2, P3) sont acquis et élaborés pour fournir un paramètre d'entrée secondaire (P8), dans laquelle ledit paramètre d'entrée secondaire (P8) est représentatif d'un facteur de glissement (sf) dudit convertisseur de couple (2) et dans laquelle ladite élaboration est une fonction mathématique fournissant une valeur du paramètre d'entrée secondaire (P8) pour des valeurs spécifiques desdits premier, deuxième et troisième paramètres d'entrée (P1, P2, P3) ;
o une troisième étape d'élaboration (105), subséquente auxdites première et deuxième étapes d'élaboration (103, 104), dans laquelle ledit premier paramètre d'entrée (P1) et ledit paramètre d'entrée secondaire (P8) sont acquis et élaborés pour fournir un deuxième et un troisième paramètres intermédiaires (P6, P7), dans laquelle ledit troisième paramètre intermédiaire (P7) est une valeur discrète supposée en fonction dudit paramètre d'entrée secondaire (P8) et dans laquelle ledit deuxième paramètre intermédiaire (P6) est représentatif d'un courant minimum pour activer lesdits moyens de vanne (5), l'élaboration pour fournir ledit deuxième paramètre intermédiaire (P6) est une fonction mathématique fournissant une valeur de ce dernier pour des valeurs spécifiques dudit premier paramètre d'entrée (P1) et dudit paramètre d'entrée secondaire (P8),

• une deuxième étape d'élaboration (102) comprenant une étape unique (106) de combinaison dudit quatrième paramètre d'entrée (P4) avec lesdits premier, deuxième et troisième paramètres intermédiaires (P6, P7, P8) pour émettre un signal de sortie (0) configuré pour commander lesdits moyens de vanne (5), ladite combinaison dudit quatrième paramètre d'entrée (P4) comprenant une élaboration mathématique basée sur des coefficients calculés en fonction desdits premier, deuxième et troisième paramètres intermédiaires (P5, P6, P7).

2. Procédé selon la revendication 1, dans lequel ladite vitesse dudit véhicule de travail est calculée en multipliant ledit premier paramètre d'entrée (P1) par une valeur mémorisée représentative du diamètre des roues dudit véhicule de travail.

3. Procédé selon la revendication 1 ou 2, dans lequel ladite fonction pour fournir ledit premier paramètre intermédiaire (P5) comprend une relation polynomiale entre ledit premier paramètre d'entrée (P1) et des coefficients mémorisés dans ladite unité de commande électronique (6).

4. Procédé selon l'une quelconque des revendications précédentes, dans lequel ladite élaboration de ladite fonction pour fournir le paramètre d'entrée secondaire (P8) fournit une valeur en pourcentage, ledit pourcentage étant la valeur complémentaire du rapport entre ledit deuxième paramètre d'entrée (P2) par rapport à la multiplication desdits premier et troisième paramètres d'entrée (P1, P3).

5. Procédé selon l'une quelconque des revendications précédentes, dans lequel ladite élaboration pour fournir ledit troisième paramètre intermédiaire (P7) est définie par une sélection de valeurs correspondantes à partir de valeurs tabulées mémorisées dans ladite unité de commande électronique (6) en fonction dudit paramètre d'entrée secondaire (P8), lesdites valeurs étant au moins trois.

6. Procédé selon l'une quelconque des revendications précédentes, dans lequel ladite fonction pour fournir ledit deuxième paramètre intermédiaire (P5) comprend une relation polynomiale entre ledit premier paramètre d'entrée (P1) et des coefficients mémorisés dans ladite unité de commande électronique (6).

7. Procédé selon l'une quelconque des revendications précédentes, dans lequel ledit signal de sortie (0) est défini par une fonction dudit quatrième paramètre d'entrée (P4) et de coefficients, certains parmi lesdits coefficients étant mémorisés dans ladite unité de commande électronique (6) et les autres parmi lesdits coefficients étant calculés en fonction desdits premier et deuxième paramètres intermédiaires (P5, P6), ladite fonction étant une fonction mémorisée sélectionnée sur la base de la valeur discrète dudit troisième paramètre intermédiaire (P7).

8. Procédé selon la revendication 7, dans lequel ladite fonction définissant ledit signal de sortie est une fonction polynomiale lorsque ledit troisième paramètre intermédiaire (P7) est égal à zéro, une fonction linéaire lorsque ledit troisième paramètre intermédiaire (P7) est égal à un et une fonction logarithmique lorsque ledit troisième paramètre intermédiaire (P7) est égal à deux.

9. Procédé selon la revendication 7 ou 8, dans lequel lesdits coefficients calculés sont calculés en imposant la valeur dudit quatrième paramètre d'entrée (P4) à un premier point correspondant à la valeur desdits premiers paramètres intermédiaires (P5) dans lesquels le signal de sortie (0) est défini selon une première valeur préétablie et un second point correspondant à la valeur dudit deuxième paramètre intermédiaire (P6) dans lequel le signal de sortie (0) est défini selon une seconde valeur préétablie.

10. Véhicule de travail comprenant :

un moteur (1) portant une pompe hydraulique pour délivrer un fluide audit circuit de puissance hydraulique et un convertisseur de couple (2) couplé, via des moyens d'embrayage (7), à une transmission (8) dudit véhicule de travail,

un contrôleur de chaîne cinématique (9) configuré pour commander lesdits moyens d'embrayage (7) et/ou ladite transmission (8),

une manette (10) configurée pour être manipulée par un utilisateur dudit véhicule de travail et pour générer un signal électrique configuré pour commander lesdits moyens de vanne (5) en fonction du déplacement par rapport à une position de repos de ladite manette (10),

une unité électronique (6) connectée électriquement audit contrôleur de chaîne cinématique (9) et à ladite manette (10), ladite unité électronique (6) comprenant des moyens d'élaboration configurés pour acquérir des données provenant dudit véhicule de travail, élaborer ce dernier selon un procédé (100) selon l'une quelconque des revendications précédentes pour générer un signal de commande pour commander lesdits moyens de vanne (5), lesdites données acquises comprenant :

- Un premier paramètre d'entrée (P1) représentant une vitesse dudit véhicule de travail,
- Un deuxième paramètre d'entrée (P2) représentant une vitesse de l'arbre d'entrée couplé audit convertisseur de couple (2),
- Un troisième paramètre d'entrée (P3) lié au rapport de vitesse sélectionné dans ladite transmission (8), et
- Un quatrième paramètre d'entrée (P4) représentant une position de ladite manette (10).

# FIG. 1

EP 3 825 476 B1

FIG. 2

1-D T(u)

1-D Lookup Table

100

101

102

103

104

105

106

P1

P2

P3

P4

P5

P6

P7

P8

**EP 3 825 476 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3392110 A